(19) Europäisches Patentamt
European Patent Office
Office européen des brevets

(11) Publication number: 0 320 286 A2

(12) # EUROPEAN PATENT APPLICATION

(21) Application number: 88311685.7

(51) Int. Cl.4: G 11 B 11/10

(22) Date of filing: 09.12.88

(30) Priority: 10.12.87 JP 312970/87
28.12.87 JP 335553/87

(43) Date of publication of application:
14.06.89 Bulletin 89/24

(84) Designated Contracting States:
AT BE CH DE ES FR GB GR IT LI LU NL SE

(71) Applicant: MITSUI PETROCHEMICAL INDUSTRIES, LTD.
2-5, Kasumigaseki 3-chome Chiyoda-ku
Tokyo 100 (JP)

(72) Inventor: Mizumoto, Kunihiko
4-1, Yusyudai-nishi 2-chome
Ichihara-shi Chiba (JP)

Haruta, Koichi
5, Yusyudai-nishi 2-chome
Ichihara-shi Chiba (JP)

Kajiura, Hirokazu
5, Yusyudai-nishi 2-chome
Ichihara-shi Chiba (JP)

(74) Representative: Myerscough, Philip Boyd et al
J.A.Kemp & Co. 14, South Square Gray's Inn
London, WC1R 5EU (GB)

(54) **Magnetooptical recording medium.**

(57) A magnetooptical recording medium comprises a transparent substrate (1) to which are laminated, in order, a first protective film (2), a magnetooptical recording film (3) and a second protective film (4) wherein the recording film (4) is a thin film of an amorphous alloy of the formula:
(Pt and/or Pd)$_y$ [RE$_x$TM$_{1-x}$]$_{1-y}$
wherein RE is at least one rare earth element selected from Nd, Sm, Pr, Ce, Eu, Gd, Tb, Dy and Ho, TM is at least one transition metal selected from Fe and Co, and x and y are positive numbers such that $0.2 < x < 0.7$ and $0.04 < y < 0.30$, and has an easy axis of magnetization perpendicular to the film face. This recording medium has excellent resistance to oxidation.

FIG. I

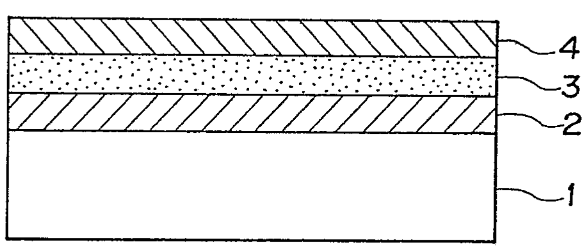


EP 0 320 286 A2

Description

# MAGNETOOPTICAL RECORDING MEDIUM

## FIELD OF THE INVENTION

The present invention relates to a magnetooptical recording medium having excellent resistance to oxidation, more particularly, it relates to a magnetooptical recording medium comprising a transparent substrate, a first protective film, a magnetooptical recording film and a second protective film, said films being laminated on said substrate in this order, and having an easy axis of magnetization perpendicular to a face of said recording film and being excellent in resistance to oxidation.

## BACKGROUND OF THE INVENTION

It is known that thin films of an amorphous alloy comprising at least one transition metal such as iron and cobalt and at least one rare earth element such as terbium (Tb) and gadolinium (Gd) have an easy axis of magnetization perpendicular to the film face and are capable of forming a small inverse magnetic domain with magnetization anti-parallel to the magnetization of the film. By corresponding the existence or non-existence of this inverse magnetic domain to "1" or "0", it becomes possible to record a digital signal on the amorphous alloy thin film as mentioned above.

As thin films of an amorphous alloy comprising at least one transition metal and at least one rare earth element which can be used in magnetooptical recording media, thin films of amorphous alloys of Tb-Fe series containing from 15 to 30 atom of Tb, are disclosed, for example, in Japanese Patent Publication 57-20691. There are also known magnetooptical recording media comprising a thin film of an amorphous alloy of Tb-Fe series to which a third metal has been added. Magnetooptical recording media of Tb-Co series and Tb-Fe-Co series are known as well.

Though the magnetooptical recording media comprising a thin film of an amorphous alloy as exemplified above have excellent recording and reproducing characteristics, they still involve such a serious problem from a practical standpoint that the amorphous alloy thin film is subject to oxidation in the course of ordinary use and the characteristics come to change with time.

The mechanism of oxidative deterioration of amorphous alloy thin films comprising transition metals and rare earth elements as mentioned above, is discussed, for example, in Journal of the Society of Applied Magnetism of Japan, Vol.9,No.2,pp93-96, and this paper reports that this mechanism of oxidative deterioration may be classified into three types as noted below.

a) Pit corrosion

By pit corrosion is meant the occurrence of pinholes in the amorphous alloy film. This corrosion proceeds mainly under the circumstances of high humidity, and it markedly proceeds, for example, in films of Tb-Fe and Tb-Co series.

b) Surface oxidation

A surface oxide layer is formed on the surface of the amorphous alloy film, whereby the Kerr-rotation angle $\theta k$ of the film changes with time and eventually comes to decrease.

c) Selective oxidation of rare earth elements

Rare earth elements present in amorphous alloy films are selectively oxidized, whereby coercive force Hc of the films comes to largely change with time.

Various attempts have heretofore been made to inhibit such oxidative deterioration of amorphous alloy thin films as mentioned above. For instance, there is proposed a procedure in which a thin film of an amorphous alloy is to have a three-layer structure wherein the film is sandwitched between anti-oxidizing protective films such as those of $Si_3N_4$, SiO, $SiO_2$ and AlN. The anti-oxidizing protective films as proposed above, however, involved such a problem that sufficient inhibition of oxidative deteroration of the amorphous alloy films is not always expected even when such anti-oxidizing protective films are formed on the amorphous alloy films. In fact, if the anti-oxidizing protective films have pin holes, they can not prevent oxidative degradation of the amorphous alloy films from proceeding from those prortions of the latter films which correspond to the pin holes of teh former films.

Furthermore, various attempts are being made to improve resistance to oxidation of amorphous alloy thin films by incorporating a third component metal into the films such as Tb-Fe and Tb-Co series.

For instance, Journal of the Society of Applied Magnetism of Japan cited above discloses an attempt to improve resistance to oxidation of amorphous alloy thin film of Tb-Fe or Tb-Co series by incorporation into the films of such third component metal as Co, Ni, Pt, Al, Cr anb Ti in an amount of up to 3.5 atom %. In connection with the attempt, the said Journal reports that the incorporation of small amounts of Co, Ni and Pt into Tb-Fe or

Tb-Co is effective in inhibiting the surface oxidation and pit corrosion of the resulting film but has no effect on inhibition of the selective oxidation of Tb contained as a rare earth element in this film. This disclosure means that when small amounts of Co, Ni and Pt are added to Tb-Fe or Tb-Co, Tb present in the resulting film is selectively oxidized, and coercive force Hc of the film largely changes. Thus, even when small amounts up to 3.5 atom % of Co, Ni and Pt are added to Tb-Fe or Tb-Co, no sufficient improvement in resistance to oxidation of the resulting film is made.

With the view of improving resistance to oxidation of amorphous alloy thin films, a teaching on the amorphous alloy thin films which are obtained by adding Pt, Al, Cr and/or Ti in an amount up to 10 atom % to Tb-Fe or Tb-Fe-Co is disclosed on page 209 of the Proceedings of The Nineth Conference the Society Applied Magnetism of Japan (November 1985). Even when Pt, Al, Cr and/or Ti in an amount up to 10 atom % are added to Tb-Fe or Tb-Fe-Co, however, inhibition of selective oxidation of Tb present in the resulting films is not sufficients, though the surface oxidation and pit corrosion can be inhibited to a fairly effective extent. Thus, there was still left such a problem that the coercive force Hc of the resultant films will largely change with time, and eventually the coercive force Hc will largely decrease.

Japanese Patent Laid-Open Publication 58-7806 discloses polycrystalline thin films having a composition of PtCo in which Pt is contained in an amount of 10-30 atom %.

However, the polycrystalline thin films having this composition of PtCo involves such problems that the polycrystalline thin films as formed require heat treatment such as annealing because they are polycrystalline, that grain boundaries sometimes appear as noise signals, and that the polycrystalline thin films are high in Curie point.

## OBJECT OF THE INVENTION

The invention is to solve the above-discussed problems associated with the prior art and an object of the invention is to provide a magnetooptical recording medium which has excellent magnetooptical characteristics including an increased coercive force and large Kerr- and Faraday-rotation angles, and which is excellent in resistance to oxidation and in consequence the coercive force and Kerr-angle do not substantially change with time.

## SUMMARY OF THE INVENTION

A magnetooptical recording medium according to the invention comprises a transparent substrate, a first protective film, a magnetooptical recording film and a second protective film, said films being laminated on said substrate in this order, in which said magnetooptical recording film is a thin film of an amorphous alloy and has an easy axis of magnetization perpendicular to a face of said recording film, said alloy being represented by the formula:

$(Pt \text{ an/or } Pd)_y\ [RE_x\ TM_{1-x}]_{1-y}$

wherein RE is at least one rare earth element selected from the group consisting of Nd, Sm, Pr, Ce, Eu, Gd, Tb, Dy and Ho, TM is at least one transition metal selected from the group consisting of Fe and Co, and x and y are positive numbers satisfying $0.2<x<0.7$ and $0.04<y<0.30$, respectively.

The magnetooptical recording medium according to the invention has excellent magnetooptical characteristics including an increased corrective force and large Kerr-and Faraday-angles; and is excellent in resistnace to oxidation whereby the coercive force and Kerr-angle do not substantially change with time.

## BRIEF DESCRIPTION OF THE DRAWINGS

Fig. 1 is a diagrammatic, enlarged cross-sectional view of a magnetooptical recording medium according to the invention;

Fig. 2 is a graphical showing of a relationship between the CO/(Fe + Co) ratio by atom and the noise level N in dBm of a magnetooptical recording film containing Pt;

Fig. 3 is a graphical showing of a relationship between the CO/(Fe + Co) ratio by atom and the noise level N in dBm of a magnetooptical recording film containing Pd;

Fig. 4 is a graphical showing of a relationship between the CO/(Fe + Co) ratio by atom and the erasion deterioration in terms of the Δ C/N in dB on magnetooptical recording films containing Pt and Pd, respectively;

Fig. 5 is a graphical showing of a relationship between the Pt or Pd content in atom and the resistance to oxidation in terms of the Δ C/N in dB on magnetooptical recording films containing Pt and Pd, respectively;

Fig. 6 is a graphical showing of a relationship between the bias magnetic field in Oe and the C/N ratio on magnetooptical recording films one containing Pt and the other containing no Pt;

Fig. 7 is a graphical showing of a relationship between the Pt or Pd content in atom and the minimum

bias magnetic field H sat. in Oe on magnetooptical recording films containing Pt and Pd, respectively;

The results shown in Figs. 2 to 7 were obtained on magnetooptical recording media, each having a structure as shown in Fig.1 and comprising a substrate of an ethylene cyclotetradodecen, first protective film of $SiN_x$ ($0<x<4/3$) of a thickness of 700 Å, a magnetooptical recording film of a thickness of 300 Å and a second protective film of a nickel alloy having a thickness of 1000 Å.

Fig.8 is a graphical showing of change of the Hc/Hco ratio with time on a magnetooptical recording film of $Pt_8Tb_{28}Fe_{51}Co_{13}$ which can be used herein and on those of $Tb_{25}Co_{75}$ and $Tb_{25}Fe_{66}Co_9$ which are outside the scope of the invention; and

Fig.9 is a graphical showing of change of the Hc/Hco ratio with time on a magnetooptical recording film of $Pt_{13}Tb_{30}Fe_{49}Co_8$ which can be used herein and on those of $Tb_{25}Co_{75}$ and $Tb_{25}Fe_{66}Co_9$ which are outside the scope of the invention.

## DETAILED DESCRIPTION OF THE INVENTION

The magnetooptical recording medium according to the invention will now be described in detail.

The magnetooptical recording medium according to the invention comprises, as shown in Fig. 1, a transparent substrate 1, a first protective film 2, a magnetooptical recording film 3 and a second protective film 4, said films being laminated on said substrate in this order. The magnetooptical recording film 3 is a thin film of an amorphous alloy and has an easy axis of magnetization perpendicular to a face of the film, said alloy being represented by the formula:

$(\text{Pt and/or Pd})_y\ [RE_xTM_{1-x}]_{1-y}$

wherein RE is at least one rare earth element selected from a gropu consisting of Nd, Sm, Pr, Ce, Eu, Gd, Tb, Dy and Ho, TM is at least one transition metal selected from the group consisting of Fe and Co, and x and y are positive numbers satisfying $0.2<x<0.7$ and $0.04<y<0.30$, respectively.

## Transparent substrate

As materials for the transparent substrate 1, those which have heretofore been used for this purpose can be generally used. Examples of them include, for example, glass, polymethyl methacrylate, polycarbonate, a polymer alloy of polycarbonate and polystyrene, amorphous polyolefins as described in US patent No.4,614,778, poly(4-methyl-1-pentene), epoxy resins, polyethersulfone, polysulfone, polyetherimide and copolymers of ethylene and tetracyclododecenes. Of these, copolymers of ethylene and tetracyclododecenes as described hereinafter are particularly preferred.

The thickness of the transparent substitute may be normally from 0.5 to 0.25 mm and, preferably form 1.0 to 1.5 mm.

The transparent substrate 1 is preferably composed of a random copolymer [A] of ethylene and at least one cycloolefin of the general formula [I] or [II], said copolymer having an intrinsic viscosity [η] of from 0.05 to 10 dl/g as measured in decalin at a temperature of 135°C and a softening temperature (TMA) of at least 70°C.

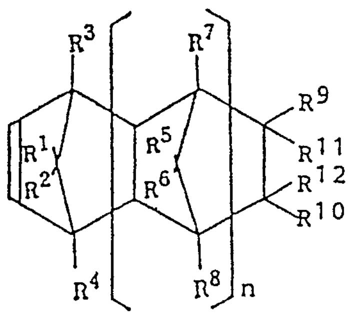

[I]

[II]

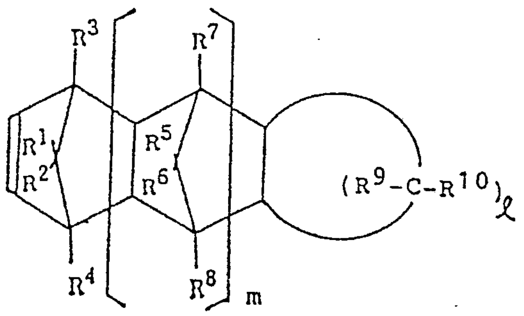

wherein n and m each is 0 or a positive integer, $\ell$ is an integer of at least 3, $R^1$ through $R^{12}$ each represents a hydrogen or halogen atom or a hydrocarbon group.

It is also preferable that the transparent subsatitute 1 is composed of a polymeric composition comprising a random copolymer [A] as mentioned above and a radnom copoloymer [B] of ethylene and at least one cycloolefin of the general formula [I] or [II] above, said copolymer [B] having a intrinsic viscosity [η] of from 0.05 to 5 dl/g as measured in decalin at a temperature of 135°C. and a softening temperature (TMA) of lower than 70°C., the ratio by weight of the copolymer [A] to the copolymer [B] in the polymeric composition being within the range from 100/0.1 to 100/10.

In the polymer chain of the random copolymers [A] and [B] the component derived from the cycloolefin of the general formulas [I] and [II] is present in the form of recurring units as represented by the following general formulas [III] and [IV], respectively.

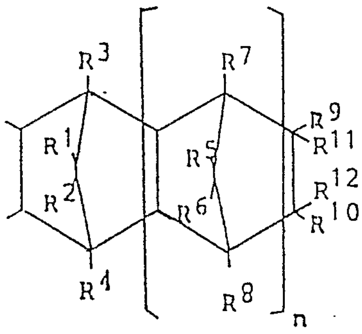

[III]

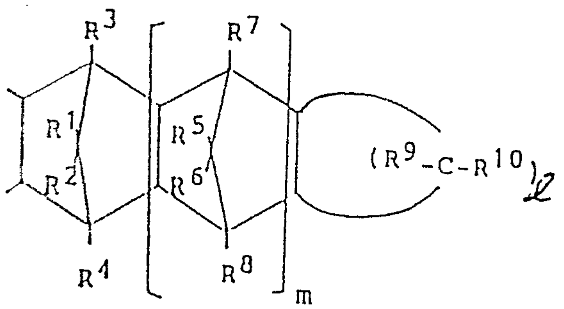

[IV]

wherein n and m each is 0 or a positive integer, ℓ is an integer of at least 3, R1 through R12 each represents ahydrogen or halogen atom or a hydrocarbon group.

At least one cycloolefin selected from the group consisting of unsaturated monomers represented by the general formulas [I] and [II] is usable herein to copolymerize with ethylene. The cycloolefins represented by the general formula [I] can easily be prepared by condensation of cyclopentadienes with appropriate olefins by Diels-Alder reaction, and similarly the cycloolefins represented by the general formula [II] can easily be prepared by condensation of cyclopentadienes with appropriate cycloolefins by Diels-Alder reaction.

The cycloolefins represented by the general formula [I] in the concrete are such compounds as exemplified in Table 1 or, in addition to 1,4,5,8-dimethano-1,2,3,4,4a,5,8,8a-octahydronaphthalene, such octahydronaphthalenes as 2-methyl-1,4,5,8-dimethano-1,2,3,4,4a,5,8,8a-octahydronaphthalene, 2-ethyl-1,4,5,8-dimethano-1,2,3,4,4a,5,8,8a-octahydronaphthalene, 2-propyl-1,4,5,8-dimethano-1,2,3,4,4a,5,8,8a-octahydronaphthalene, 2-hexyl-1,4,5,8-dimethano-1,2,3,4,4a,5,8,8a-octahydronaphthalene, 2,3-dimethyl-1,4,5,8-dimethano-1,2,3,4,4a,5,8,8a-octahydronaphthalene, 2-methyl-3-ethyl-1,4,5,8-dimethano-1,2,3,4,4a,5,8,8a-octahydronaphthalene, 2-chloro-1,4,5,8-dimethano-1,2,3,4,4a,5,8,8a- octahydronaphthalene, 2-bromo-1,4,5,8-dimethano-1,2,3,4,4a,5,8,8a-octahydronaphthalene, 2-fluoro-1,4,5,8-dimethano-1,2,3,4,4a,8,8a-octahydronaphthalene, 2,3-dichloro-1,4,5,8-dimethano-1,2,3,4,4a,5,8,8a-octahydronaphthalene, 2-cyclohexyl-1,4,5,8-dimethano-1,2,3,4,4a,5,8,8a-octahydronaphthalene, 2-n-butyl-1,4,5,8-dimethano-1,2,3,4,4a,5,8,8a-octahydronaphthalene, 2-isobutyl-1,4,5,8-dimethano-1,2,3,4,4a,5,8,8a-octahydronaphthalene, etc. and such compounds as exemplified in Table 2.

Table 1

| Chemical formula | Compound name |
|---|---|
| 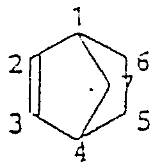 | Bicyclo[2,2,1]hept-2-ene |
| 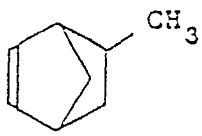 | 6-Methylbicyclo[2,2,1]hept-2-ene |
| 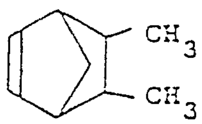 | 5,6-Dimethylbicyclo[2,2,1]hept-2-ene |
| 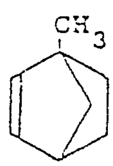 | 1-Methylbicyclo[2,2,1]hept-2-ene |
| 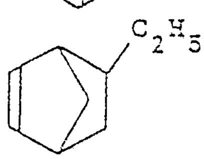 | 6-Ethylbicyclo[2,2,1]hept-2-ene |
| 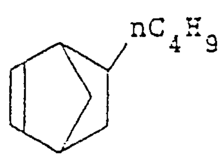 | 6-n-Butylbicyclo[2,2,1]hept-2-ene |
| 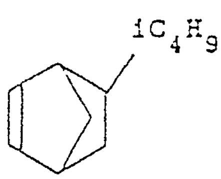 | 6-Isobutylbicyclo[2,2,1]hept-2-ene |
| 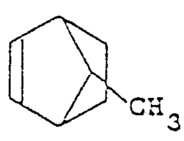 | 7-Methylbicyclo[2,2,1]hept-2-ene |

Table 2

| Chemical formula | Compound name |
|---|---|
| 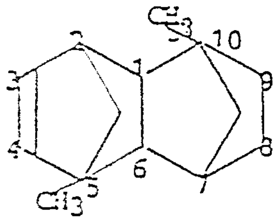 | 5,10-Dimethyltetracyclo-[4,4,0,$1^{2.5}$,$1^{7.10}$]-3-dodecene |
| 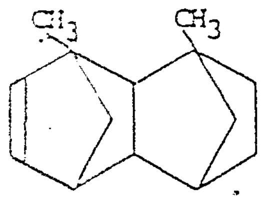 | 2,10-Dimethyltetracyclo-[4,4,0,$1^{2.5}$,$1^{7.10}$]-3-dodecene |
| 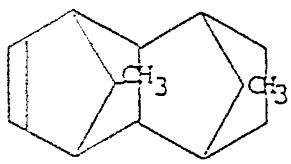 | 11,12-Dimethyltetracyclo-[4,4,0,$1^{2.5}$,$1^{7.10}$]-3-dodecene |
| 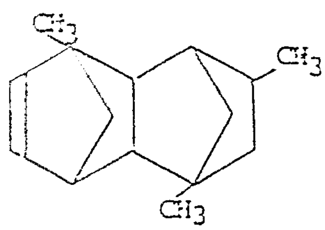 | 2,7,9-Trimethyltetracyclo-[4,4,0,$1^{2.5}$,$1^{7.10}$]-3-dodecene |
| 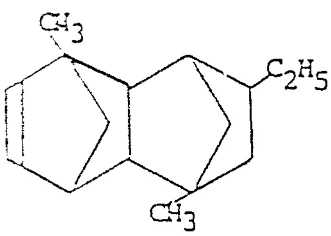 | 9-Ethyl-2,7-dimethyltetracyclo-[4,4,0,$1^{2.5}$,$1^{7.10}$]-3-dodecene |
| 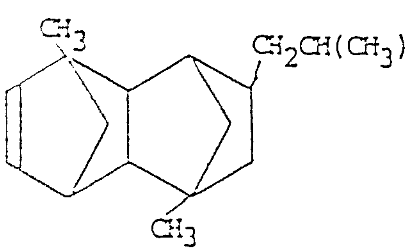 | 9-Isobutyl-2,7-dimethyltetracyclo-[4,4,0,$1^{2.5}$,$1^{7.10}$]-3-dodecene |

Table 2 (continued)

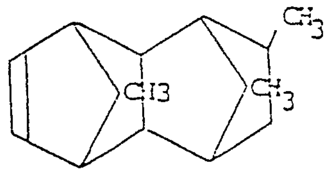

9,11,12-trimethyltetracyclo-$[4,4,0,1^{2.5},1^{7.10}]$-3-dodecene

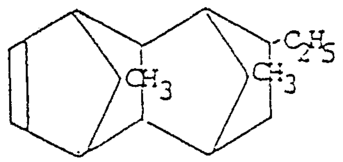

9-Ethyl-11,12-dimethyltetracyclo-$[4,4,0,1^{2.5},1^{7.10}]$-3-dodecene

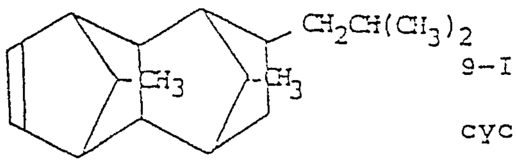

9-Isobutyl-11,12-dimethyltetracyclo$[4,4,0,1^{2.5},1^{7.10}]$-3-dodecene

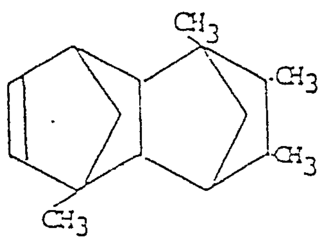

5,8,9,10-Itramethyltetracyclo-$[4,4,0,1^{2.5},1^{7.10}]$-3-dodecene

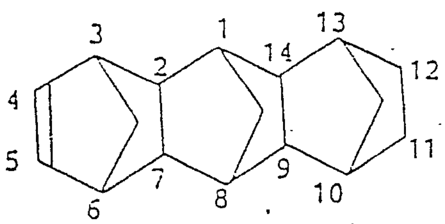

Hexacyclo$[6,6,1,1^{3.6},1^{10.13},0^{2.7},0^{9.14}]$-4-heptadecene

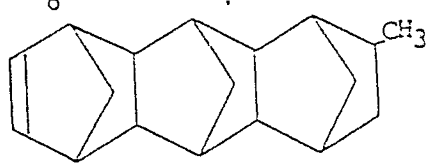

12-Methylhexacyclo$[6,6,1,1^{3.6},1^{10.13},0^{2.7},0^{9.14}]$-4-heptadecene

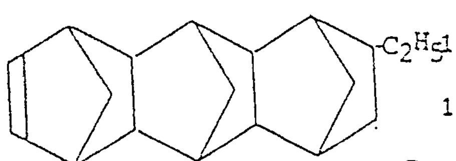

12-Ethylhexacyclo$[6,6,1,1^{3.6},1^{10.13},0^{2.7},0^{9.14}]$-4-heptadecene

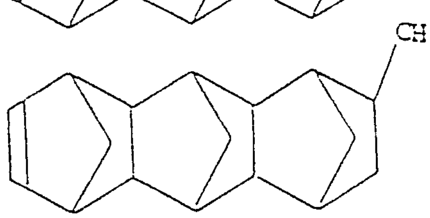

12-Isobutylhexacyclo$[6,6,1,1^{3.6},1^{10.13},0^{2.7},0^{9.14}]$-4-heptadecene

Table 2 (continued)

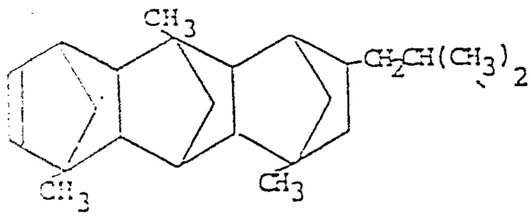

1,6,10-Trimethyl-12-isobutylhexacyclo[6,6,1,$1^{3.6}$,$1^{10.13}$,$0^{2.7}$,$0^{9.14}$]-4-heptadecene

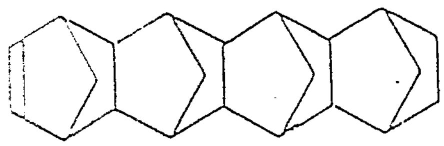

Octacyclo[8,8,0,$1^{2.9}$,$1^{4.7}$,$1^{11.18}$,$1^{13.16}$,$0^{3.8}$,$0^{12.17}$]-5-docosene

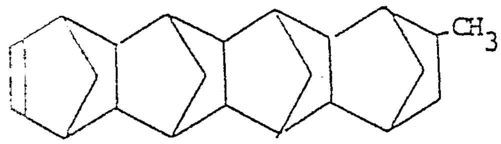

15-Methyloctacyclo[8,8,0,$1^{2.9}$,$1^{4.7}$,$1^{11.18}$,$1^{13.16}$,$0^{3.8}$,$0^{12.17}$]-5-docosene

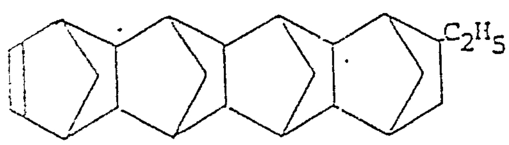

15-Ethyloctacyclo[8,8,0,$1^{2.9}$,$1^{4.7}$,$1^{11.18}$,$1^{13.16}$,$0^{3.8}$,$0^{12.17}$]-5-docosene

The cycloolefins represented by the general formula [II] in the concrete are, for example, those as exemplified in Tables 3 and 4.

Table 3

| Chemical formula | Compound name |
|---|---|
| 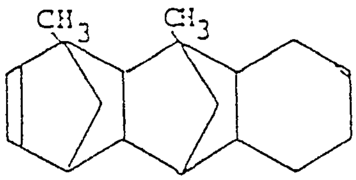 | 1,3-Dimethylpentacyclo[6,6,1,$1^{3.6}$,$0^{2.7}$,$0^{9.14}$]-4-hexadecene |
| 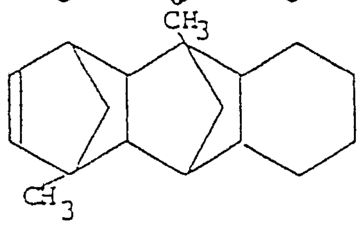 | 1,6-Dimethylpentacyclo[6,6,1,$1^{3.6}$,$0^{2.7}$,$0^{9.14}$]-4-hexadecene |
| 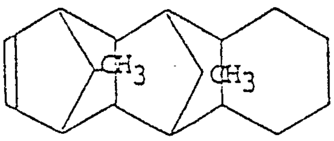 | 15,16-Dimethylpentacyclo[6,6,1,$1^{3.6}$,$0^{2.7}$,$0^{9.14}$]-4-hexadecene |
| 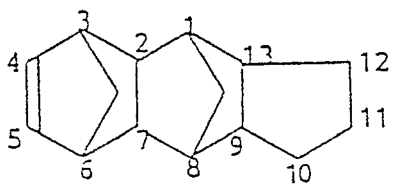 | Pentacyclo[6,5,1,$1^{3.6}$,$0^{2.7}$,$0^{9.13}$]-4-pentadecene |
| 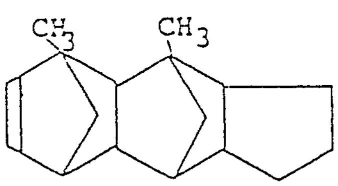 | 1,3-Dimethylpentacyclo[6,5,1,$1^{3.6}$,$0^{2.7}$,$0^{9.13}$]-4-pentadecene |
| 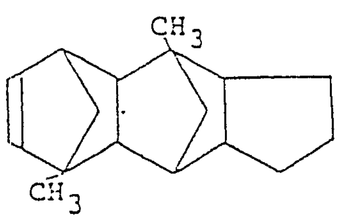 | 1,6-Dimethylpentacyclo[6,5,1,$1^{3.6}$,$0^{2.7}$,$0^{9.13}$]-4-pentadecene |
| 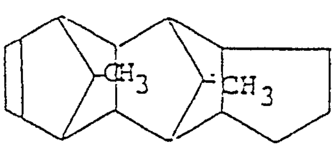 | 14,15-Dimethylpentacyclo[6,5,1,$1^{3.6}$,$0^{2.7}$,$0^{9.13}$]-4-pentadecene |

Table 3 (continued)

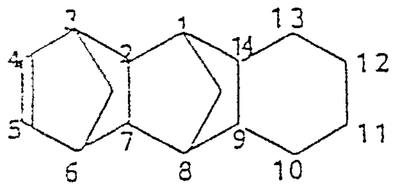

Pentacyclo[6,6,1,$1^{3.6}$,$0^{2.7}$,$0^{9.14}$]-4-hexadecene

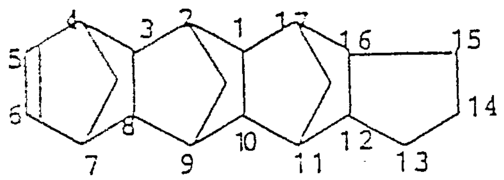

Heptacyclo[8,7,0,$1^{2.9}$,$1^{4.7}$,$1^{11.17}$,$0^{3.8}$,$0^{12.16}$]-5-eicosene

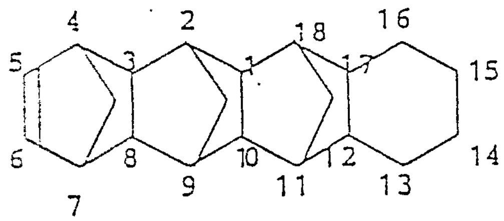

Heptacyclo[8,8,0,$1^{2.9}$,$1^{4.7}$,$1^{11.18}$,$0^{3.8}$,$0^{12.17}$]-5-heneicosene

Table 4

| Chemical formula | Compound name |
| --- | --- |
| 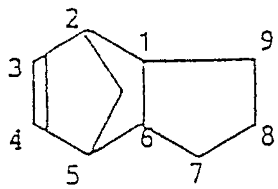 | Tricyclo[4,3,0,$1^{2.5}$]-3-decene |
| 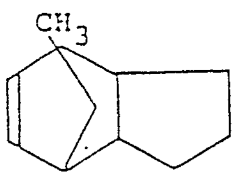 | 2-Methyl-tricyclo[4,3,0,$1^{2.5}$]-3-decene |
| 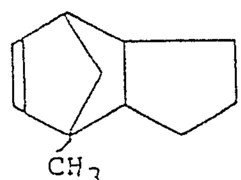 | 5-Methyl-tricyclo[4,3,0,$1^{2.5}$]-3-decene |
| 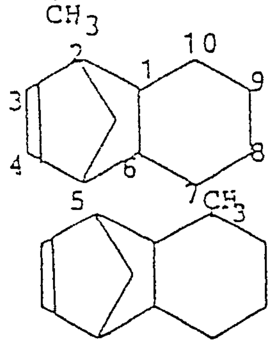 | Tricyclo[4,4,0,$1^{2.5}$]-3-undecene |
| | 10-Methyl-tricyclo[4,4,0,$1^{2.5}$]-3-undecene |

While the random copolymers [A] and [B] comprise a first component derived from ethylene and a second component derived from at least one cycloolefin of the general formula [I] or [II], as the essential constituent components, if desired, they may further comprise a third component derived from at least one other copolymerizable monomer in an amount of up to an equimolar to that of the first component contained in the copolymer. Monomers which can be used to form the third component include, for example, alpha-olefins having from 3 to 20 carbons atoms such as propylene, 1-butene, 4-methyl-1-pentene, 1-hexene, 1-octene, 1-decene, 1-dodecene, 1-tetradecene, 1-hexadecene, 1-octadecene and 1-eicocene.

In the copolymer [A] having a softening temperature (TMA) of at least 70 °C., the recurring units (a) derived from ethylene are present in an amount of from 40 to 85 % by mole, preferably from 50 to 75 % by mole, while the recurring units (b) of the general formula [III] or [IV] derived from the cycloolefin or cycloolefins are present in an amount of from 15 to 60 % by mole, preferably from 25 to 50 % by mole, and these recurring units (a) and (b) are arranged in the copolymer [A] substantially at random. The molar percentages of the recurring units (a) and (b) were determined by $^{13}C$-NMR. The fact that the copolymer [A] is completely soluble in decalin at a temperature of 135°C., indicates that it is substantially linear and free from a gel-forming cross-linked structure.

The copolymer [A] has an intrinsic viscosity [η] of from 0.05 to 10 dl/g, preferably from 0.08 to 5 dl/g, as measured in decalin at a temperature of 135°C.

The softening temperature (TMA) of the copolymer [A], as measured by a thermal mechanical analyzer is at

least 70°C., preferably from 90° to 250°C., and more preferably from 100 ° to 200°C.

The softening temperature (TMA) of the copolymer [A] was determined by monitoring thermal deformation behavior of a 1 mm sheet of the copolymer [A] using a thermomechanical analyzer supplied by Du pont. More specifically, a quarz needle was vertically placed on the sheet under a load of 49 g and the assembly was heated at a rate of 5°C./min. The temperature at which the needle penetrated into the sheet by a depth of 0.635mm was taken as the softening temperature of the copolymer [A].

The copolymer [A] has a glass transition temperature (Tg) of normally from 50° to 230°C, and preferably from 70° to 210°C.

The crystallinity of the copolymer [A], as measured by X-ray diffractomery , is normally from 0 to 10 %, preferably from 0 to 7 %, and more preferably from 0 to 5%.

In the random copolymer [B] having a softening temperature (TMA) of lower than 70°C. the recurring units (a) derived from ethylene are present in an amount of from 60 to 98% by mole, preferably from 60 to 95% by mole, while the recurring units (b) of the general formula [III] or [IV] derived from at least one cycloolefin are present in an amount of from 2 to 40% by mole, preferably from 5 to 40% by mole, and these recurring units (a) and (b) are arranged in the copolymer [B] substantially at random. The molar percentages of the recurring units (a) and (b) in the copolymer [B] were determined by $^{13}C$-NMR. The fact that the copolymer [B] is completely soluble in decalin at a temperature of 135°C., indicates that it is substantially linear and free from a gel-forming cross-linked structure.

The copolymer [B] has an intrinsic viscosity [η] of from 0.01 to 5 dl/g, preferably from 0.08 to 3 dl/g as measured in decalin at a temperature of 135°C.

The softening temperature (TMA) of the copolymer [B], as measured by a thermal mechanical analyzer is lower than 70°C. preferably from -10 to 60°C., more preferably from 10 to 55°C.

The copolymer [B] has a glass transition temperature (Tg) of normally from -30 to 60°C., preferably from -20 to 50°C.

The crystallinity of the copolymer [B], as measured by X-ray diffractometry, is normally from 0 to 10%, preferably from 0 to 7%, and more preferably from 0 to 5%.

In the polymeric composition comprising the copolymers [A] and [B] which is preferably used for preparing the transparent substrate 1 of the megnetooptical recording medium according to the invention, the copolymers [A] and [B] are present in such a proportion that the ratio by weight of the copolymer [A] to the copolymer [B] is from 100/0.1 to 100/10, preferably from 100/0.3 to 100/7, and more preferably from 100/0.5 to 100/5.

When compared with a substrate made of the copolymer [A] alone, a substrate made of the above described polymeric compostion comprising the copolymer [B] in addition to the copolymer [A] provides an improved adhesion between the substrate 1 and a first protective film 2, while retaining comparable transparency and surface smoothness.

The random copolymers [A] and [B] may both be prepared by suitably selecting conditions under which they are prepared in accordance with the processes as proposed by the present applicants in Japanese Patent L-O-P Publns. Nos.168708/1985, 120816/1986, 115912/1986, 115916/1986, 95905/1986, 95906/1986, 271308/1986 and 272216/1986.

In preparing the polymeric compositions, there are applicable various known processes which include, for example, a process wherein the copolymers [A] and [B] are prepared separately, and the copolymers [A] and [B] thus prepared are blended by means of an extruder to obtain a desired composition, a solution blending process wherein the copolymers [A] and [B] are thoroughly dissolved separately in suitable solvent, for example, saturated aliphatic hydrocarbons such as heptane, hexane, decane, cyclohexane, etc., or aromatic hydrocarbons such as toluene, benzene, xylene, etc., and the respective solutions are subjected to solution blending to obtain a desired composition, or a process wherein the copolymers [A] and [B] are prepared individually by means of separate polymerization reactors, and the resulting polymers are blended with a separate vessel to obtain a desired composition.

An intrinsic viscosity [η] as measured at 135°C in decalin of the polymeric composition is in the range of 0.05-10 dl/g, preferably 0.08-5 dl/g, more preferably 0.2-3 dl/g, and still particularly preferably 0.3-2 dl/g, a softening temperature (TMA) as measured with a thermal mechanical analyzer of the composition is in the range of 80-250°C, preferably 100-200oC, and more preferably 120-170°C, and a glass transition temperature (Tg) of the composition is in the range of 70-230°C, preferably 80-160°C, and more preferably 90-150°C.

The copolymer [A] or the composition comprising the copolymers [A] and [B] may be incorporated with heat stabilizers, weathering stabilizers, antistatic agents, slip agents, anti-blocking agents, anti-fogging agents, lubricants, dyes, pigments, natural oil, synthetic oil, wax, etc., and amounts of these additives may be suitably decided. For instance, the stabilizers which may be optionally incorporated include concretely phenolic antioxidants such as tetrakis [methylene-3-(3,5-di-t-butyl-4-hydroxyphenyl)propionate] methane, β-(3,5-di-t-butyl-4-hydroxyphenyl)propionic acid alkyl esters (particularly preferred are alkyl esters of less than 18 carbon atoms), 2, 2′-oxamidobis[ethyl-3-(3,5-di-t-butyl-4-hydroxyphenyl)]propionate, etc., metallic salts of fatty acids such as zinc stearate, calcium stearate, calcium 12-hydroxystearate, etc., and fatty acid esters of polyhydric alcohols such as glycerin monostearate, glycerin monolaurate, glycerin distearate, pentaerythritol distearate, pentaerythritol tristearate, etc. These compounds may be used either singly or in combination. For instance, there may be used such a combination of tetrakis [methylene-3-(3,5-di-t-butyl-4-hydroxyphenyl)propionate]methane with zinc stearate and glycerin monostearate, and the like combinations.

It is preferable to use phenolic antioxidants in combination with fatty acid esters of polyhydric alcohols. The fatty acid esters of polyhydric alcohols are preferably those which are obtained by partial esterification of polyhydric alcohols having acid at least 3 alcoholic hydroxyl groups. Concrete examples of such fatty acid esters of polyhydric alcohols as mentioned above include fatty acid esters of glycerin such as glycerin monostearate, glycerin monolaurate, glycerin monomyristate, glycerin monopalmitate, glycerin distearate, glycerin dilaurate, etc. and their mixtures, and fatty acid esters of pentaerythritol such as pentaerythritol monostearate, pentaerythritol monolaurate, pentaerythritol distearate, pentaerythritol dilaurate, pentaerythritol tristearate, etc. and their mixtures, and fatty acid esters of solbitol such as solbitol monosteanted solbitol monolaurate solbitol distearate, etc and their mixture.

The phenolic antioxidants as illustrated above are used in an amount of 0.01-10 parts by weight, preferably 0.05-3 parts by weight based on 100 parts by weight of the polymeric composition. Similarly, the fatty acid esters of polyhydric alcohols are used in an amount of 0.01-10 parts by weight, preferably 0.05-3 parts by weight based on 100 parts by weight of the polymeric composition.

The polymeric composition described above comprising the copolymers [A] and [B] has a moisture absorption smaller than those of polycarbonates and poly(methyl methacrylate) which have heretofore been used as a material for substrates of magnetooptical recording media, and thus the magnetooptical recording film formed on the substrate made of the polymeric composition recommended herein via the first protective film is less likely to be oxidized by moisture. Further, the substrate made of the above recommended polymeric composition exhibits a good adhesion to the first protective film. This fact further contributes to inhibition of the magnetooptical recording film formed via the first protective film on the substrate made of the above-described polymeric composition, thereby enhancing the durability and long term stability of the magnetooptical recording medium having the magnetooptical recording film formed via the first protective film on the substrate made of the above-described polymeric composition.

Further, the substrate made of the above-described polymeric composition has a reduced birefringence providing an increased sensitivity of the magnetooptical recording film for reading out information making it possible to use a non-function type driving device at the time of reading out information.

## First protective film

The first protective film 2 formed on the transparent substrate 1 described above consists of a nitride such as $Si_3N_4$, $SiN_x$ wherein x satisfies $0<x<4/3$, AlN, AlSiN and BN; an oxide such as $SiO_2$, Tb-$SiO_2$, Mg-$SiO_2$, $Al_2O_3$, $SiO_2$-$Al_2O_3$, Mg-$SiO_2$-$Al_2O_3$ Th-$SiO_2$-$Al_2O_3$, $BaSiO_2$, Ba-$Al_2O_3$, Ba-silica alumina, Te-$Al_2O_3$, Mg-$Al_2O_3$, $TiO_2$, SiO, TiO, ZnO, $ZrO_2$, $Ta_2O_5$, $Nb_2O_5$, $CeO_2$, $SnO_2$, $TeO_2$ and indium-tin oxide; a sulfide such as ZnS and CdS; and ZnSe, SiC and Si.

Further, $CH_4$- or $CS_2$- plasma spray coated or sputtered films or organic films, in particular UV cured organic films such as Teflon film may also be utilized as the first protective film.

The first protective film 2 has a thickness of normally from 50 to 5000 Å, preferably from 100 to 2000 A, and functions as a protective film for protecting the magnetooptical recording film 3 from oxidation and also as an enhancing film.

## Magnetooptical recording film

The magnetooptical recording film 3 formed on the first protective film 2 is a thin film of an amorphous alloy and has an easy axis of magnetization perpendicular to a face of said recording film. The alloy consists essentially of (i) at least one transition metal selected from Fe and Co, (ii) Pt and/or Pd and (iii) at least one rare earth element, and is represented by the formula:

$(\text{Pt and/or Pd})_y\ [RE_xTM_{1-x}]_{1-y}$

wherein RE is at least one rare earth element selected from the group consisting of Nd, Sm, Pr, Ce, Eu, Gd, Tb, Dy and Ho, TN is at least one transition metal selected from the group consisting of Fe and Co, and x and y are positive numbers satisfying $0.2<x<0.7$ and $0.04<y<0.30$, respectively.

### (i) Transition metal (TM)

The transition metal (TM) is selected from Fe and Co, and when the composition of the magnetooptical film 3 is expressed by the formula above TM is contained in the magnetooptical film 3 in an amount of (1-x) wherein x satisfies $0.2<x<0.7$, preferably $0.25<x<0.5$, and more preferably $0.3<y<0.5$.

As the TM, we prefer a combination of Fe and Co, in particular a combination of Fe and from 0 up to 65 atom % of Co based on the combined atoms of Fe and Co.

Up to 5 atom %, in particular up to 3 atom % of Ni may be contained as the TM.

### (ii) Pt and/or Pd

When the composition of the magnetooptical film 3 is expressed by the formula above, Pt and/or Pd is contained in the magnetooptical recording film 3 in an amount of y which satisfies $0.04<y<0.30$. Namely, Pt

and/or Pd is present in the magnetooptical recording film 3 in an amount of more than 4 atom % but less than 30 atom %, preferably in an amount of more than 4 and less than 20 atom %.

If the content of Pt and/or Pd is substantially less than 4 atom % resistance to oxidation of the magnetooptical film 3 is not sufficiently improved, and even if the protective films 2 and 4 are provided, the magnetooptical recording film 3 can be oxidized leading to decrease in the coercive force Hc and Kerr-angle k of the magnetooptical recording film 3 with time in cases where the protective film 2 or 4 has pin holes.

Pt and Pd may be used alone or in combination.

(iii) Rare earth element (RE)

The magnetooptical recording film 3 comprises, in addition to the (i) TM and (ii) Pt and/or Pd, (iii) at least one rare earth element (RE) selected from the group consisting of Nd, Sm, Pr, Ce, Eu, Gd, Tb, Dy and Ho. Preferably at least 60 atom % of the RE, and more preferably at least 80 atom % of the RE, consists of Tb and the balance of RE consists of Dy, Sm, Pr, Ce, Eu, Gd and/or Ho.

When the compostion of the magnetooptical film 3 is expressed by the formula above RE is contained in the magnetooptical film 3 in an amount of x satisfying $0.2<x<0.7$, preferably $0.25<x<0.5$, and more preferably $0.3<x<0.5$.

The magnetooptical recording film 3 has a thickness of normally from 200 to 2000 Å, and preferably from 200 to 1000 Å.

The magnetooptical recording film 3 preferably has the following composition.

(i) TM

In the magnetooptical recording film recommended herein, Fe or Co or both are contained, and Fe and/or Co is preferably present in the magnetooptical recording film in an amount of at least 20 atom %, preferably at least 35 atom %, but less than 72 atom %, and more preferably at least 40 atom but not more than 59 atom %.

Further, Fe and/or Co present in the magnetooptical recording film is preferably in such an amount that the Co/(Fe + Co) ratio by atom is from 0 to 0.3, preferably from 0 to 0.2, and more preferably from 0.01 to 0.2.

When the amount of Fe and/or Co is in the range of at least 40 atom % but not more than 80 atom %, there is such an advantage that a magnetooptical recording film which is excellent in resistance to oxidation and has an easy axis of magnetization perpendicular to the film is obtained.

In this connection, when Co is incorporated into a magnetooptical recording film, there are observed such phenomena as (a) the Curie point of the magnetooptical recording film increases and (b) the Kerr-rotation angle ($\theta k$) becomes large. As the result, the recording sensitivity of the magnetooptical recording film can be adjusted by the amount of Co to be incorporated and, moreover, a carrier level of reproduced signal increases by incorporating Co. In the preferred magnetooptical recording film, the Co/(Fe + Co) ratio by atom is from 0 to 0.3, preferably from 0 to 0.2, and more preferably from 0.01 to 0.2.

Fig. 2 shows a relationship between the Co/(Fe + Co) ratio by atom and the noise level in dBm on a magnetooptical recording film of PtTbFeCo series, and Fig. 3 shows a relationship between the Co/(Fe + Co) ratio by atom and the noise level in dBm on a magnetooptical recording film of PdTbFeCo series.

As we have shown in Fig. 2, in a case of a magnetooptical recording film having a composition represented by $Pt_{13}Tb_{28}Fe_{50}Co_9$, as recommended herein, in which the Co/(Fe + Co) ratio by atom is 0.15,the noise level is -56 dBm, whereas in a case of a magnetooptical recording film having a composition represented by $Pt_{13}Tb_{28}Fe_{36}Co_{23}$, in which the Co/(Fe + Co) ratio by atom is 0.39, the noise level is as high as -50 dBm, Further, as we have shown in Fig. 3, in a case of a magnetooptical redording film having a composition represented by $Pd_{14}Tb_{27}Fe_{52}Co_7$, as recommended herein, in which the Co/(Fe + Co) ratio by atom is 0.12, the noise level is -56 dBm, whereas in a case of a magnetooptical recording film having a composition represented by $Pd_{14}Tb_{27}Fe_{41}Co_{18}$, in which the Co/(Fe + Co) ratio by atom is 0.31, the noise level is as high as -51 dBm.

Fig. 4 shows a relationship between the erasion deterioration in terms of $\Delta$ C/N ratio in dB and the Co/(Fe + Co) ratio by atom on two series of magnetooptical recording films, one of the compostion of PtTbFeCo and the other of the composition of PdTbFeCo.

Specifically, even when a magnetooptical recording film having a composition represented by $Pt_{13}Tb_{28}Fe_{50}Co_9$, as recommended herein, in which the Co/(Fe + Co) ratio by atom is 0.155, has been irradiated with an increased energy at the time of erasing the information once recorded therein, no change in film properties occurs, and new information can be recorded on the erased recording film with the same C/N value as that prior to the erasion.

Furthermore, with a magnetooptical recording film recommended herein no change in film property will occur even when recording and erasing information are repeatedly performed. For instance, no decrease in C/N ratio is observed even when the recording and erasing operations are performed 100,000 times in a magnetooptical recording film having the composition of $Pt_{13}Tb_{28}Fe_{50}Co_9$.

(ii) Pt and/or Pd

Magnetooptical recording films contain Pt or Pd, or both, and the amount of Pt and/or Pd contained in the magnetooptical recording films is more than 4 atom % but less than 30 atom % preferably more than 4 atom % but not more than 20 atom %, and more preferably more than 4 atom % but not more than 19 atom %.

The presence in the magnetooptical recording film of Pt and/or Pd in excess of 4 atom % brings about such advantages that resistance to oxidation of said recording film becomes excellent, and even when it is used for a prolonged period of time, no pit corrosion occurs and the C/N ratio does not become low. In the absence of protective films, at least 10 atom % of Pt and/or Pd is normally required to sufficiently inhibit oxidation of the magnetooptical recording film. However, when the magnetooptical film is protected by the protective films, as proposed herein, oxidation of the recording film can be satisfactorily inhibited advantageously even with less than 10 atom % of Pt and/or Pd.

Fig. 5 shows a relationship between the content of Pt or Pd in the magnetooptical recording film containing Pt or Pd and the decrease of the C/N ratio when said recording film is retained for 1000 hours under the ances of 85% RH and 80°C.

It is thus understood from Fig. 5 that when the amount in the magnetooptical recording film of Pt or Pd is in excess of 5 atom %, in particular more than 10 atom %, resistance to oxidation of said recording film improves, no pit corrosion occurs even after a long-term use and also the C/N ratio will not deteriorate.

For instance, a magnetooptical recording film having a composition represented by $Pt_{13}Tb_{28}Fe_{50}Co_9$ or $Pd_{12}Tb_{28}Fe_{53}Co_7$ will not change in the C/N ratio at all even when it is maintained under the circumstance of 85% RH and 80°C for 1000 hours. In contrast thereto, a magnetooptical recording film having a composition represented by $Tb_{25}Fe_{68}Co_7$ containing no Pt or Pd will greatly decrease in the C/N ratio when it is maintained for 1000 hours under the circumstances of 85% RH and 80°C.

By incorporation into a magnetooptical recording film of Pt and/or Pd in an amount within the range as specified above, a sufficiently high C/N ratio can be obtained even by a small bias magnetic field when information is recorded on the magnetooptical recording film or when the information recorded is read out therefrom. If a sufficiently high C/N ratio is obtained by a small bias magnetic field, a magnet for producing a bias magnetic field can be made small in size and, moreover, heat generation from the magnet can be inhibited and hence simplification of a driving device for an optical disc bearing the magnetooptical recording film thereon is made possible. Moreover, because a sufficiently large C/N ratio is obtained by a small bias magnetic field, it becomes easy to design a magnet for magnetic field modulation recording capable of overwrite.

Fig. 6 shows a relationship between the bias magnetic field and the C/N ratio (dB) of a magnetooptical recording film having a recommended composition of $Pt_{13}Tb_{28}Fe_{50}Co_9$ and of a magnetooptical recording film having a composition represented by $Tb_{25}Fe_{68}Co_7$.

It is understood from Fig. 6 that in the conventionally known magnetooptical recording film represented by $Tb_{25}Fe_{68}Co_7$, the C/N ratio is not saturated unless a bias magnetic field of more than 250 Oe is applied, whereas in the magnetooptical recording film recommended herein, represented by $Pt_{13}Tb_{28}Fe_{50}Co_9$, recording can be performed even by a small bias magnetic field and the C/N ratio is saturated at a level of 120 Oe or more. In the following examples and comparative examples, a Hsat value of the minimum bias magnetic field of each magnetooptical recording film is shown, at which the C/N ratio is saturated. The smaller is this Hsat value, it follows that the C/N ratio is saturated by a small bias magnetic field.

Fig. 7 shows a relationship between the content of Pt or Pd and the minimum bias magnetic field (Hsat, (Oe) ) on a magnetooptical recording film of PtTbFeCo series and on a magnetooptical recording film of PdTbFeCo series.

It is understood from Fig. 7 that the minimum bias magnetic field, Hsat, becomes sufficiently small when the content of pt and/or Pd exceeds 10 atom %.

(iii) RE

In the magnetooptical recording film, at least one rare earth element (RE) is contained, and usable as the rare earth element are Nd, Sm, Pr, Ce, Eu, Gd, Tb, Dy and Ho, alone or in combination.

Of the rare earth elements illustrated above, preferably usable are Nd, Pr, Gd, Tb and Dy, and particularly preferred is Tb. The rare earth elements may be used in combination of two or more, and in this case the combination preferably contains at least 50 atom % of Tb.

From the standpoint of obtaining an optical magnetism having an easy axis of magnetization perpendicular to the film, it is preferable that this rare earth element is present in a magnetooptical recording film in such an amount as $0.15 \leqq x \leqq 0.45$, preferably $0.20 \leqq x \leqq 0.4$, wherein x represents RE/(RE + FE + Co) [atomic ratio].

## Second protective film

The second protective film 4 formed on the magnetooptical recording film 3 described above consists of a nitride such as $Si_3N_4$, AlN, AlSiN and BN; an oxide such as $SiO_2$, Tb-$SiO_2$, Mg-$SiO_2$, $Al_2O_3$, $SiO_2$-$Al_2O_3$, Ng-$SiO_2$-$Al_2O_3$, Th-$SiO_2$-$Al_2O_3$, $BaSiO_2$, Ba-$Al_2O_3$, Ba-silica alumina, Te-$Al_2O_3$, Mg-$Al_2O_3$, $TiO_2$, SiO, TiO, ZnO, $ZrO_2$, $Ta_2O_5$, $Nb_2O_5$, $CeO_2$, $SnO_2$, $TeO_2$ and indium-tin oxide; a sulfide such as ZnS and CdS; and ZnSe, SiC and Si; and a metal such as Pt, Pd, Ti, Cr, Zr and Ni, as a metallic alloy such as a Ni-Cr alloy, Al alloy and Cu allloy.

Further, $CH_4$- or $CS_2$ - plasma spray coated or sputterd films or organic films, in pareticular UV cured organic films such as Teflon film may also be utilized as the second protective film.

The second protective film 4 functions as a protective film for protecting the magnetooptical recording film 3

from oxidation and also as a reflective film.

The second protective film 4 has a thickness of normally from 50 to 5000 Å, preferably from 100 to 2000 Å in cases of inorgamic materials, and a thickness of normally from 100 Å to 100 µm, preferably from 300 Å to 500 µm in cases of organic materials.

The magnetooptical recording media according to the invention have an easy axis of magnetization perpendicular to a face of the magnetooptical recording film 3, and most of them exhibit a Kerr hysteresis of good square loop.

By the term "Kerr hysteresis of a good square loop" used herein is meant that the ratio $\theta K_2/\theta K_1$ is at least 0.8 wherein $\theta K_1$ is a saturated Kerr-rotation angle that is a Kerr-rotation angle where the external magnetic field is maximum, and $\theta K_2$ is a residual Kerr-rotation angle that is a Kerr-rotation angle where the external magnetic field is zero.

The magnetooptical recording media according to the invention are excellent in resistance to oxidation. For example, a magnetooptical recording medium according to the invention in which an amorphous alloy film of a composition of $Pt_8Tb_{28}Fe_{51}Co_{13}$ was sandwiched between a first protective film $Si_3N_4$ and a second protective film $Si_3N_4$ underwent little change in the coercive force when it was maintained in an environment of a temperature of 85° C. and a relative humidity of 85% for a period of more than 240 hours, as shown in Fig. 8. Further, a magnetooptical recording medium according to the invention in which an amorphous alloy film of a composition of $Pt_{13}Tb_{30}Fe_{49}Co_8$ was sandwiched between a first protective film $Si_3N_4$ and a second protective film $Si_3N_4$ underwent little change in the coercive force when it was maintained in an environment of a temperature of 85° C. and a relative humidity of 85% for a period of more than 240 hours, as shown in Fig. 9. In contrast thereto, amorphous alloy thin films of compositions of $Tb_{25}Co_{75}$ and $Tb_{25}Fe_{66}Co_9$ having no Pt underwent substantial changes with time when they were maintained in an environment of a temperature of 85° C. and a relative humidity of 85% (see Figs. 8 and 9). If this environment test is continued for about 1000 hours, the systems containing Pt and/or Pd still substantially retain their initial coercive forces at the end of the period, while the coercive force of the systems containing no Pt nor Pd decreases to a level as low as underminable at the end of the period.

Further, with the magnetooptical recording film used in the magnetooptical recording medium according to the invention, which film contains Pt and/or Pd, it is revealed from the experiments noted hereinafter that even in cases wherein the protective films have pin holes, the Kerr-rotation angle θk of the recording film is not substantially decreased by the environment test, indicating that the film has been inhibited from surface oxidation; and that microscopic observation of the surface of the recording film after the environment test indicates that the film has been controlled from pit corrosion.

In the present invention, it is also possible to improve Curie temperature, compensation temperature, coercive force Hc or Kerr-rotation angle θk, or cheapen the cost of production by incorporating various elements into the magnetooptical recording film. These elements for the purpose intended may be used, for example, in the proportion of up to 50 atom % based on the number of atoms of the rare earth elements contained in the recording film.

Examples of useful elements for this purpose include such elements as mentioned below.

(I) 3d transition elements other than Fe and Co

Concretely, such transition elements include Sc, Ti, V, Cr, Mn, Hi, Cu and Zn.

Of these elements exemplified above, preferably used are Ti, Hi, Cu and Zn.

(II) 4d transition elements other than Pd

Concretely, such transition elements include Y, Zr, Nb, Mo, Tc, Ru, Rh, Ag and Cd.

Of these transition elements exemplified above, preferably used are Zr and Nb.

(III) 5d transition elements other than Pt

Concretely, such transition elements include Hf, Ta, W, Re, Os, Ir, Au and Hg.

Of these transition elements, preferably used is Ta.

(IV) Group III B elements

Concretely, B, Al, Ga, In, and Tl are used.

Of these elements, preferably used are B, Al and Ga.

(V) Group IV B elements

Concretely, C, Si, Ge, Sn and Pb are used.

Of these elements, preferably used are Si, Ge, Sn and Pb.

(VI) Group V B elements

Concretely, N, P, As, Sb and Bi are used.

Of these elements, preferably used is Sb.

(VII) Group VI B elements

Concretely, S, Se, Te and Po are used.

Of these elements, preferably used is Te.

Process for the preparation of the magnetooptical recording medium according to the invention will now be described.

First, a first protective film is formed of a transparent substrate. This can be done by known dry coating methods such as vacuum evaporation, sputtering, electron beam evaporation and spin coating processes.

Next, on the first protective film so formed on the transparent substrate, a magnetooptical recording film having a predetermined composition is deposited by a sputtering or electron beam evaporation process known per se wherein the substrate is maintained at about room temperature and use is made of a composite target with chips of elements for constituting the magnetooptical film to be formed in the predetermined proportions or an alloy target having the predetermined composition. The substrate may be fixed, or may rotate on its axis while revolving.

The magnetooptical recording film as illustrated above can be formed at room temperature, and the film so formed is not always in need of such a heat treatment as annealing for the purpose of allowing the film to have an easy axis of magnetization perpendicular to the film.

If necessary, in this connection, the magnetooptical recording film may also be formed while heating the substrate to a temperature of from 50 to 600°C., or while cooling the substrate to -50°C.

At the time of sputtering, moreover, biassing a substrate is also possible so that the substrate comes to have a negative potential. By doing so, ions of an inert gas such as argon accelerated in the electric field will hit not only target substances but also a magnetooptical recording film being formed and consequently a magnetooptical recording film having further enhanced characteristics may be frequently obtained.

In the next step, on the magnetooptical recording film so formed a second protective film is formed. This can also be done by known dry coating methods such as vacuum evaporation, sputtering, electron beam evaporation and spin coating processes.

The magnetooptical recording media according to the invention comprise a vertically magnetizable magnetooptical recording film having an easy axis of magnetization perpendicular to a face of the recording film; they exhibit in many cases a Kerr-hysteresis of a good square loop in a sense that the residual Kerr-angle in the absence of any external magnetic field is substantially the same as the saturated Kerr-rotation angle in the maximum external magnetic field, and they have an increased coercive force Hc; and thus, they are particularly useful in magnetooptical recording. Since the fact that the Kerr-rotation angle is good means that the Faraday-rotation angle is good, the magnetooptical recording media according to the invention are utilizable in both the Kerr-effect utilizing and Faraday-effect utilizing magnetooptical recording systems.

It should be appreciated that the magnetooptical recording media according to the invention may further comprise additional constructive films or layers such as a base layer, anti-oxidant film and/or paramagnetic film of a high permeability constant. Further, they may be used singly, or in combination of two of them.

## Effect of the Invention

The magnetooptical recording medium according to the invention which comprises a transparent substrate, a first protective film, a magnetooptical recording film and a second protective film, said films being laminated on said substrate in this order, in which said magnetooptical recording film is a thin film of an amorphous alloy and has an easy axis of magnetization perpendicular to a face of said recording film, said alloy being represented by the formula:

$(Pt\ and/or\ Pd)_y[RE_xTM_{1-x}]_{1-y}$

wherein RE is at least one rare earth element selected from a group consisting of Nd, Sm, Pr, Ce, Eu, Gd, Tb, Dy and Ho, TM is at least one transition metal selected from the group consisting of Fe and Co, and x and y are positive numbers satisfying $0.2<x<0.7$ and $0.04<y<0.03$, respectively, has excellent magnetooptical characteristics, including an increased coercive force and large Kerr- and Faraday- rotation angles; and is excellent in resistance to oxidation whereby the coercive force and Kerr-rotation angle do not substantially change with time. Further, the magnetooptical recording film can be formed at room temgerature, and the film formed is not always in need of a heat treatment.

The invention will be further described by the following Examples which illustrate the invention and by the following Comparative Examples which are outside the scope of the invention. It should be appreciated that the invention is in no way limited to the Examples.

## Examples 1 to 8 and Comparative Examples 1 to 8

In each example a first protective film, magnetooptical recording film and second protectives film respectively having compositions and thicknesses indicated in Table 5 were sequentially formed by sputtering in this order on a glass substrate.

In the case of protective films of dielectric material such as nitrides and oxides, a target of the corresponding sintered material was sputtered by means of an RF magnetron. In the case of metallic protective films, the corresponding metallic target was sputtered by means of a DC magnetron. On each glass

substrate having each first protective film indicated in Table 5 formed thereon, each magnetooptical recording film having a composition and thickness indicated in Table 5 was deposited by a DC magnetron sputtering process using a composite target with chips of Pt and/or Pd and necessary light and heavy rare earth elements in required proportions on a Fe or Fe-Co target. During the process the substrate was cooled to room temperature of from 20 to 30°C. with water. The conditions under which the sputtering process was carried out included Ar pressure of 5 mTorr., Ar flow rate of 3 sccm and ultimate degree of vacuum of not higher than 5 x $10^{-6}$ Torr.

The magnetooptical recording media so prepared were tested as follows:

The crystalline condition of the recording film was determined by broad angle X-ray diffractometry. The composition of the film was determined by ICP (inductive coupling plasma) emission spectroscopic analysis.

The Kerr-rotation angle was measured by the inclination incidence method ($\lambda$ = 633nm) at a remanent magnetization in the external magnetic field of zero from the side of the glass substrate. A concrete method of measurement and apparatus therefor to be employed in the inclination incident method are described in "Measuring Techniques of Magnetic Materials", compiled by Kazuo Yamakawa (published by Torikepps K.K.on December 15, 1985), pp.261-263.

The coercive force (Hco) was also determined. The x value of the recording film was calculated.

Further, the resistance to oxidation was tested in the manner as noted below. The magnetoopitcal recording medium was subjected to an environment test in which the film was allowed to stand' under a hot humid condition of 85°C., and 85% RH for a period of 240, 450 or 1000 hours. At the end of the period, the Kerr-rotation angle (θk) and coercive force (Hc) were determined and compared with the initial values prior to the environment test, θko and Hco, respectively.

Results are shown in Table 5.

Table 5

| | 1st Protective Film (Thickness) | Magnetooptical Recording Film (Thickness) | 2nd Protective Film (Thickness) | x-Value | Hco(KOe) | Hc/Hco | $\theta k/\theta ko$ |
|---|---|---|---|---|---|---|---|
| Ex. 1 | $Si_3N_4$ (800 Å) | $Pt_8Tb_{28}Fe_{51}Co_{13}$ (800 Å) | $Si_3N_4$ (800 Å) | 0.30 | 3.4 | 1.0 | 1.0 |
| Ex. 2 | $TiO_2$ (600 Å) | $Pt_8Tb_{39}Fe_{53}Co_9$ (800 Å) | $TiO_2$ (800 Å) | 0.33 | 4.5 | 1.0 | 1.0 |
| Ex. 3 | ZnS (700 Å) | $Pt_6Tb_{28}Fe_{50}Co_{16}$ (300 Å) | Ti (500 Å) | 0.30 | 2.8 | 1.0 | 1.0 |
| Ex. 4 | AlSiN (800 Å) | $Pt_7Nd_7Tb_{30}Fe_{52}Co_{11}$ (500 Å) | Cr (500 Å) | 0.39 | 4.0 | 1.0 | 1.0 |
| Ex. 5 | ZnSe (600 Å) | $Pt_6Nd_8Dy_{33}Fe_{43}Co_{10}$ (900 Å) | $Ta_2O_5$ (800 Å) | 0.44 | 2.0 | 1.0 | 1.0 |
| Ex. 6 | Si (400 Å) | $Pt_7Tb_{30}Fe_{63}$ (400 Å) | Pt (700 Å) | 0.32 | 2.0 | 1.0 | 1.0 |
| Ex. 7 | $Si_3N_4$ (800 Å) | $Pt_3Pd_5Tb_{31}Fe_{61}$ (400 Å) | 80Ni-20Cr (700 Å) | 0.34 | 2.2 | 1.0 | 1.0 |
| Ex. 8 | $Ta_2O_5$ (600 Å) | $Pt_8Gd_4Tb_{27}Fe_{54}Co_7$ (400 Å) | Ti (800 Å) | 0.34 | 1.8 | 1.0 | 1.0 |

Table 6

| | 1st Protective Film (Thickness) | Magnetooptical Recording Film (Thickness) | 2nd Protective Film (Thickness) | x-Value | Hco(KOe) | Hc/Hco | θk/θko |
|---|---|---|---|---|---|---|---|
| Ex. 9 | $Si_3N_4$ (800 Å) | $Pt_{20}Tb_{28}Fe_{42}Co_{10}$ (800 Å) | $Si_3N_4$ (800 Å) | 0.30 | 3.4 | 1.0 | 1.0 |
| Ex. 10 | $TiO_2$ (600 Å) | $Pt_{17}Tb_{30}Fe_{44}Co_9$ (800 Å) | $TiO_2$ (800 Å) | 0.33 | 4.5 | 1.0 | 1.0 |
| Ex. 11 | ZnS (700 Å) | $Pt_{22}Tb_{28}Fe_{30}Co_{20}$ (300 Å) | Ti (500 Å) | 0.30 | 2.8 | 1.0 | 1.0 |
| Ex. 12 | AlSiN (800 Å) | $Pt_{14}Nd_7Tb_{30}Fe_{40}Co_9$ (500 Å) | Cr (500 Å) | 0.39 | 4.0 | 1.0 | 1.0 |
| Ex. 13 | ZnSe (600 Å) | $Pt_{11}Nd_8Dy_{33}Fe_{41}Co_7$ (900 Å) | $Ta_2O_5$ (800 Å) | 0.44 | 2.0 | 1.0 | 1.0 |
| Ex. 14 | Si (400 Å) | $Pt_{15}Tb_{30}Fe_{51}Co_4$ (400 Å) | Pt (700 Å) | 0.32 | 2.0 | 1.0 | 1.0 |
| Ex. 15 | $Si_3N_4$ (800 Å) | $Pt_{13}Pd_5Tb_{31}Fe_{51}$ (400 Å) | 80Ni-20Cr (700 Å) | 0.34 | 2.2 | 1.0 | 1.0 |
| Ex. 16 | $Ta_2O_5$ (600 Å) | $Pt_{12}Gd_4Tb_{27}Fe_{52}Co_5$ (400 Å) | Ti (800 Å) | 0.34 | 1.8 | 1.0 | 1.0 |

Examples 9 to 16

Following the procedures of Examples 1 to 8, a first protective film, magnetooptical recording film and second protective film respectivley having compositions and thicknesses indicated in Table 6 were sequentially formed by sputtering in this order on a glass substrate.

The magnetooptical recording media so prepared were tested in the manner as described in Examples 1 to 8 for x value, Hco, Hc/Hco, and θ k/θko. Results are shown in Table 6.

Table 5(continued)

| | 1st Protective Film (Thickness) | Magnetooptical Recording Film (Thickness) | 2nd Protective Film (Thickness) | x-Value | Hco(KOe) | Hc/Hco | θk/θko |
|---|---|---|---|---|---|---|---|
| Comp. Ex. 1 | $Si_3N_4$ (800 Å) | $Tb_{25}Fe_{66}Co_9$ (800 Å) | $Si_3N_4$ (800 Å) | 0.25 | 3.2 | 2.3 | 0.66 |
| Comp. Ex. 2 | $Si_3N_4$ (800 Å) | $Tb_{25}Co_{75}$ (800 Å) | $Si_3N_4$ (800 Å) | 0.25 | 2.8 | 1.6 | 0.76 |
| Copm. Ex. 3 | $Si_3N_4$ (800 Å) | $Pt_8Tb_{28}Fe_{51}Co_{13}$ (800 Å) | ——— | 0.30 | 3.8 | 1.4 | 0.82 |
| Comp. Ex. 4 | ——— | $Pt_8Tb_{28}Fe_{51}Co_{13}$ (800 Å) | $Si_3N_4$ (800 Å) | 0.30 | 3.0 | 1.2 | 0.90 |
| Comp. Ex. 5 | ——— | $Pt_8Tb_{28}Fe_{51}Co_{13}$ (800 Å) | ——— | 0.30 | 4.4 | 1.6 | 0.78 |
| Comp. Ex. 6 | $Si_3N_4$ (800 Å) | $Pt_2Tb_{30}Fe_{50}Co_{18}$ (800 Å) | Cr (700 Å) | 0.31 | 2.0 | 1.4 | 0.81 |
| Comp. Ex. 7 | ZnS (700 Å) | $Pt_6Tb_{15}Fe_{60}Co_{19}$ (800 Å) | $TiO_2$ (500 Å) | 0.16 | * | | |
| Comp. Ex. 8 | Si (400 Å) | $Pt_8Nd_{20}Tb_{44}Fe_{28}$ (800 Å) | SiO (600 Å) | 0.72 | * | | |

* Undeterminable

## Claims

1. A magnetooptical recording medium comprising a transparent substrate and laminated thereto, in order, a first protective film, a magnetooptical recording film and a second protective film, wherein said magnetooptical recording film is a thin film of an amorphous alloy and has an easy axis of magnetization perpendicular to a face of said recording film, said alloy being represented by the formula:
$(Pt \text{ and/or } Pd)_y [RE_x TM_{1-x}]_{1-y}$
wherein RE is at least one rare earth element selected from Nd, Sm, Pr, Ce, Eu, Gd, Tb, Dy and Ho, TM is at least one transition metal selected from Fe and Co, and x and y are positive numbers such that $0.2 < x < 0.7$ and $0.04 < y < 0.30$, respectively.

2. A recording medium according to claim 1 wherein $0.25 < x < 0.5$.

3. A recording medium according to claim 1 or 2 wherein at least 60 atom % of RE consists of Tb and the balance of RE consists of at least one of Dy, Sm, Pr, Ce, Eu, Gd, and Ho.

4. A recording medium according to claim 1, 2 or 3 wherein $0.04 < y < 0.20$.

5. A recording medium according to claim 4 wherein $0.04 < y < 0.10$.

6. A recording medium according to any one of the preceding claims wherein said first protective film consists of a nitride, oxide or a sulfide.

7. A recording medium according to any one of claims 1 to 5 wherein said first protective film consists of $Si_3N_4$, AlSiN, $TiO_2$, $Ta_2O_5$, ZnS, ZnSe or Si.

8. A recording medium according to any one of the preceding claims wherein said second protective film consists of a nitride, a sulfide, a metal or a metallic alloy.

9. A recording medium according to any one of claims 1 to 7 wherein said second protective film consists of $Si_3N_4$, AlSiN, $TiO_2$, $Ta_2O_5$, ZnS, ZnSe, Cr, Pt, a Ni-Cr alloy or Ti.

FIG.1

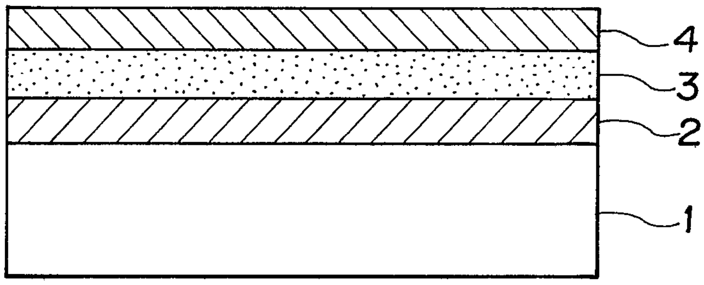
4
3
2
1

FIG.2

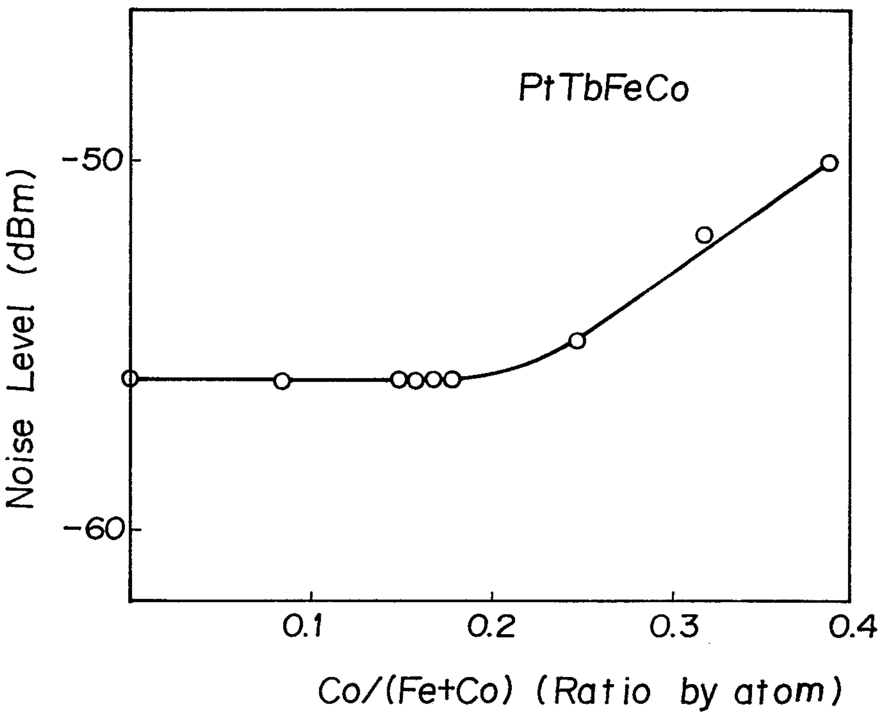
PtTbFeCo
Noise Level (dBm)
-50
-60
0.1
0.2
0.3
0.4
Co/(Fe+Co) (Ratio by atom)

FIG. 3

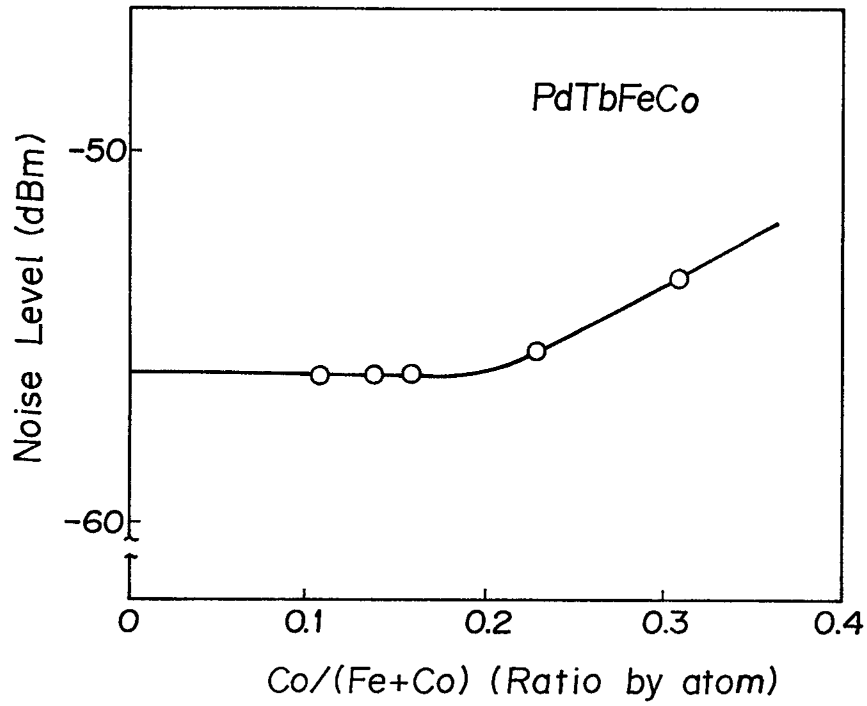
PdTbFeCo
Noise Level (dBm)
-50
-60
0
0.1
0.2
0.3
0.4
Co/(Fe+Co) (Ratio by atom)

FIG. 4

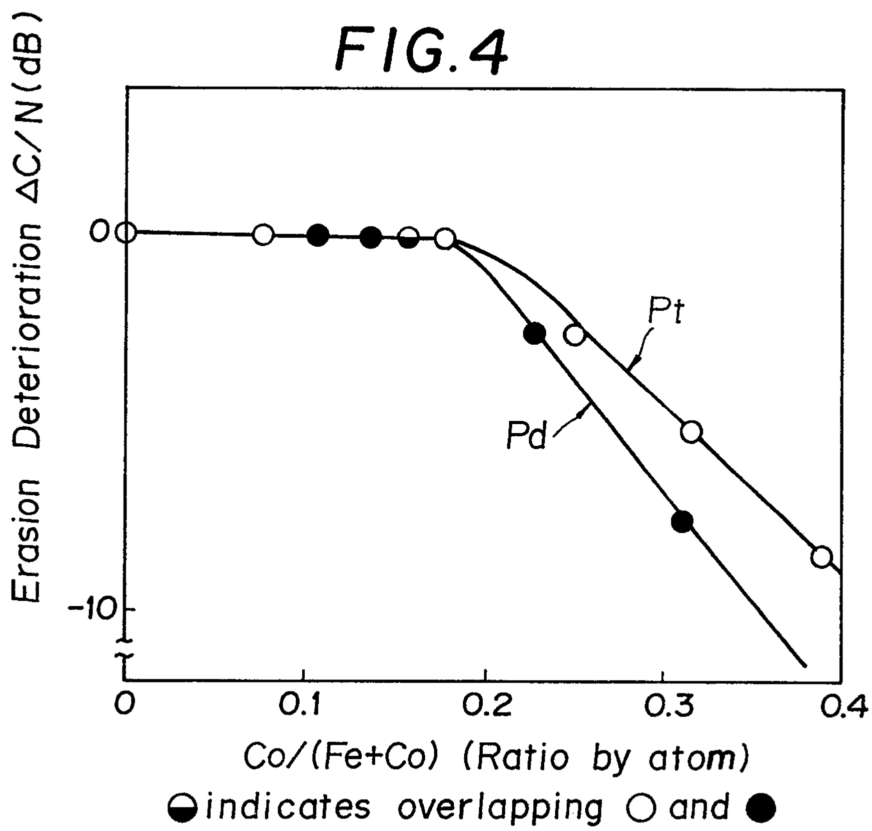
Erasion Deterioration ΔC/N(dB)
0
-10
Pt
Pd
0
0.1
0.2
0.3
0.4
Co/(Fe+Co) (Ratio by atom)
indicates overlapping and

FIG.5

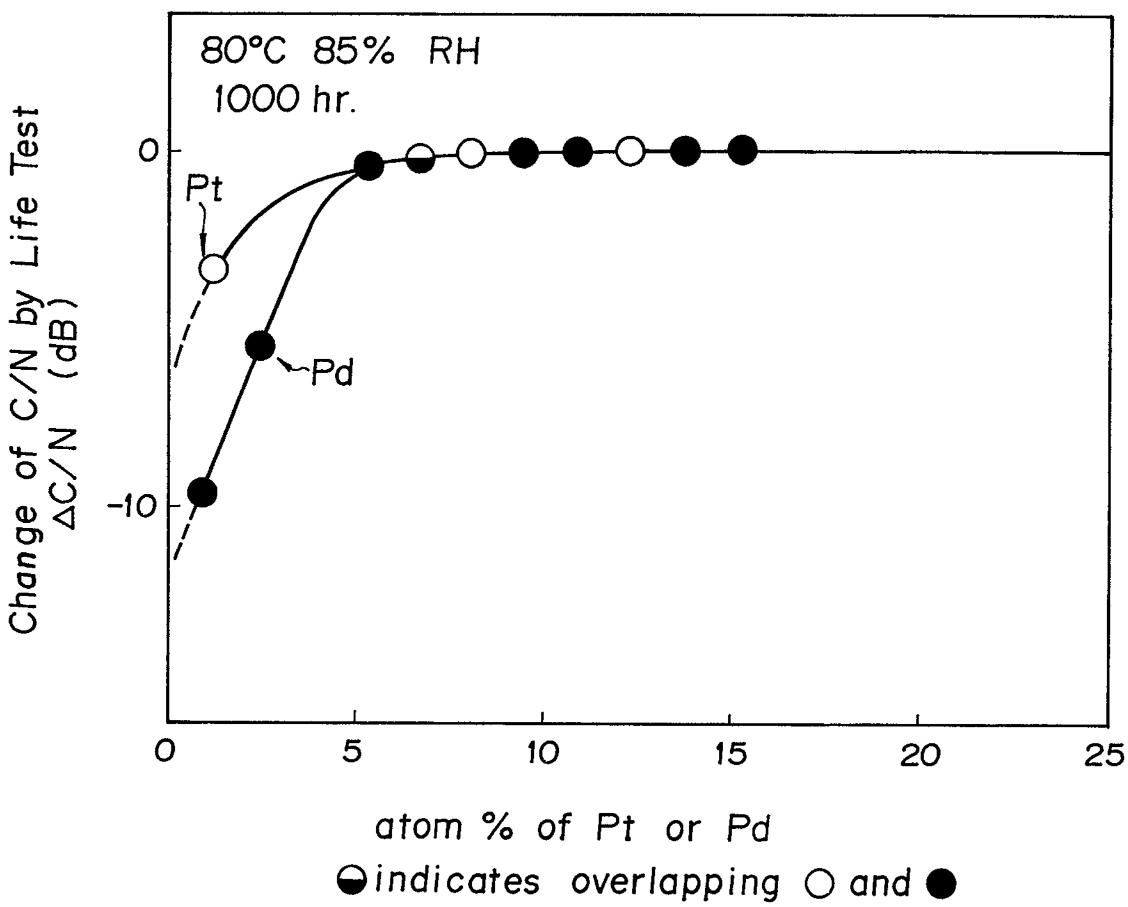
80°C 85% RH
1000 hr.
Change of C/N by Life Test
ΔC/N (dB)
0
-10
Pt
Pd
0
5
10
15
20
25
atom % of Pt or Pd
◒ indicates overlapping ○ and ●

FIG. 6

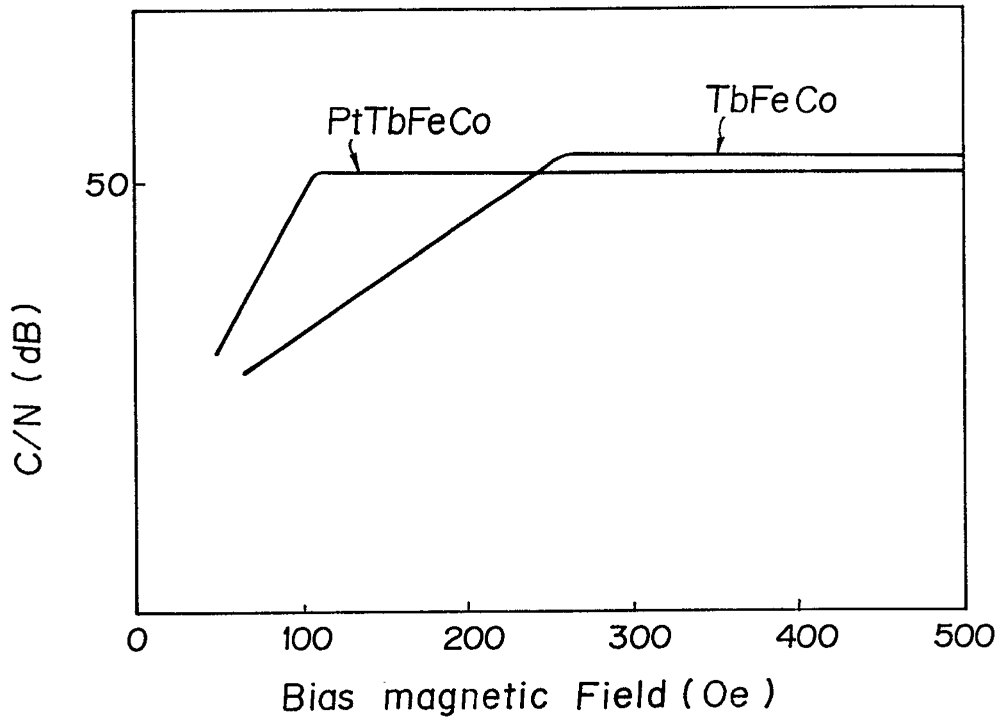
PtTbFeCo
TbFeCo
50
C/N (dB)
0
100
200
300
400
500
Bias magnetic Field (Oe)

FIG. 7

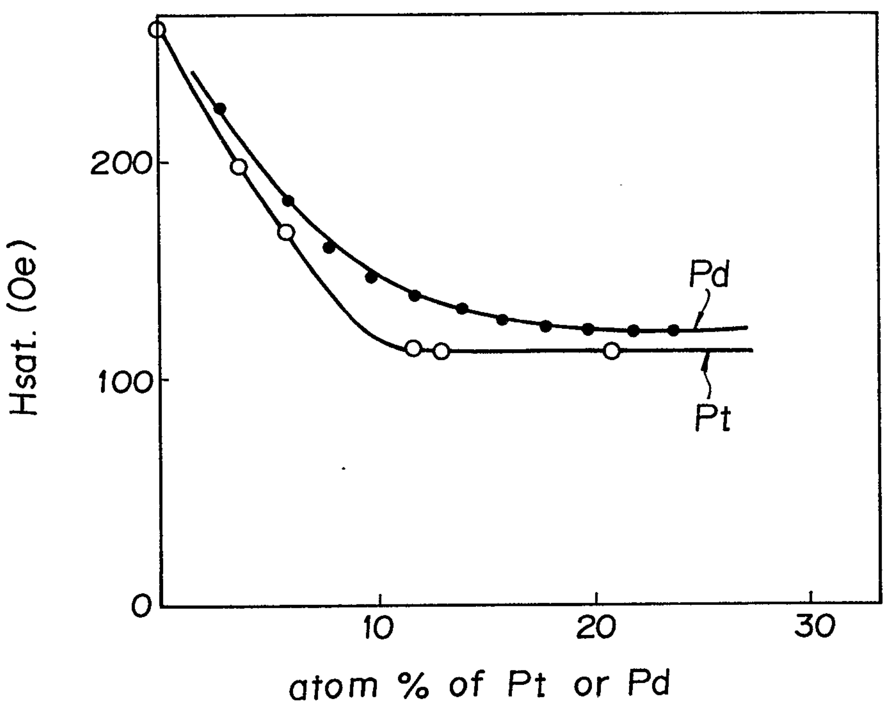
200
100
0
Hsat. (Oe)
Pd
Pt
10
20
30
atom % of Pt or Pd

FIG. 8

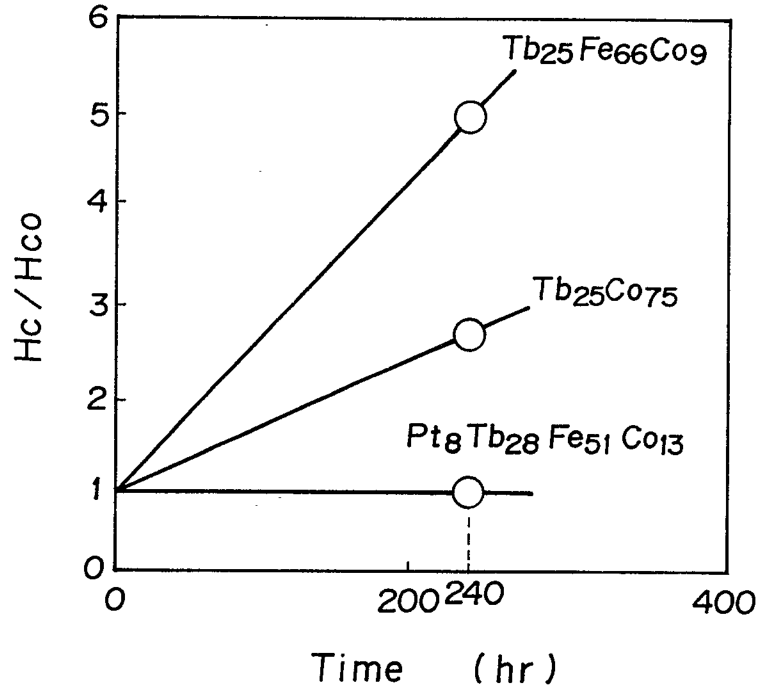
6
5
4
3
2
1
0
Hc / Hco
$Tb_{25}Fe_{66}Co_9$
$Tb_{25}Co_{75}$
$Pt_8Tb_{28}Fe_{51}Co_{13}$
0
200
240
400
Time (hr)

FIG. 9

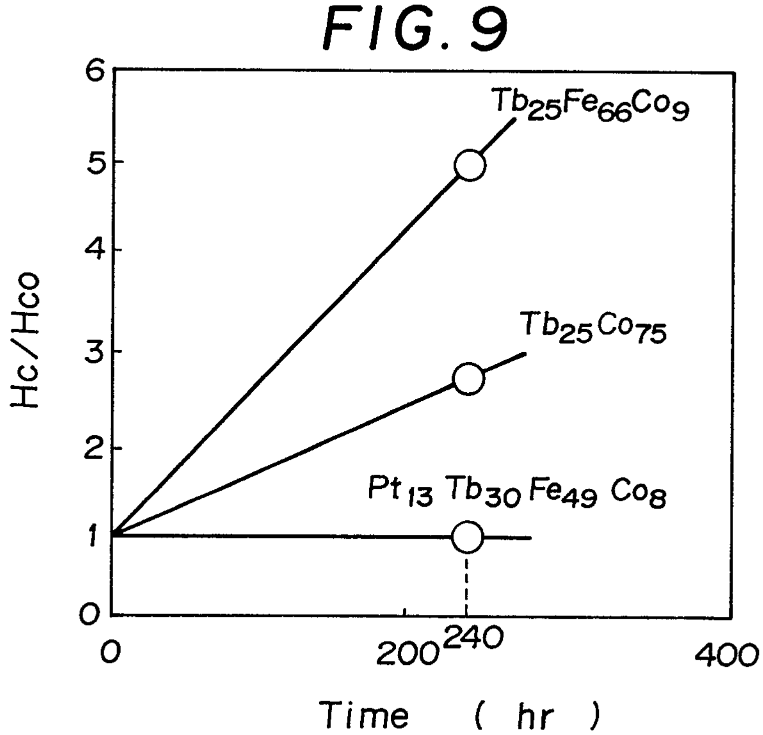
6
5
4
3
2
1
0
Hc / Hco
$Tb_{25}Fe_{66}Co_9$
$Tb_{25}Co_{75}$
$Pt_{13}Tb_{30}Fe_{49}Co_8$
0
200
240
400
Time (hr)